Europäisches Patentamt
European Patent Office
Office européen des brevets

(11) Veröffentlichungsnummer: **0 286 864**
**A2**

(12) # EUROPÄISCHE PATENTANMELDUNG

(21) Anmeldenummer: **88104326.9**

(51) Int. Cl.[4]: **C08G 79/02**

(22) Anmeldetag: **18.03.88**

(30) Priorität: **02.04.87 DE 3711092**

(43) Veröffentlichungstag der Anmeldung:
**19.10.88 Patentblatt 88/42**

(84) Benannte Vertragsstaaten:
**AT BE CH DE ES FR GB GR IT LI NL SE**

(71) Anmelder: **Chemische Fabrik Pfersee GmbH**
**Färberstrasse 4**
**D-8900 Augsburg(DE)**

(72) Erfinder: **Lüdemann, Simpert**
**Birkenweg 1**
**D-8903 Bobingen(DE)**
Erfinder: **Bernheim, Michael Dr.**
**Sonnenweg 3**
**D-8901 Aystetten(DE)**

(54) **Verfahren zur Herstellung eines wasserlöslichen, selbsthärtenden, polymeren Kondensationsproduktes, dessen wässrige Lösungen und Verwendung.**

(57) Die vorliegende Erfindung beinhaltet ein Verfahren zur Herstellung eines wasserlöslichen, selbsthärtenden, polymeren Kondensationsproduktes durch Umsetzung von 1 Mol Di-$C_{1-4}$-alkylamino-$C_{2-4}$alkyl(meth)acrylaten mit 0,3 bis 1,5 Mol Phosphonsäure-di-$C_{1-3}$-alkylestern in Gegenwart von Wasser unter Erhitzen bis zur deutlichen Viskositätserhöhung.

Werden wäßrige Lösungen dieser Kondensationsprodukte zur Behandlung von Fasermaterialien verwendet, so wird denselben eine hohe antistatische Wirkung bei nur geringen Farbtonverschiebungen und sehr guter Trocken-und Naßreibechtheit sowie Wasserechtheit verliehen. Die Effekte weisen eine gute Permanenz auf.

EP 0 286 864 A2

## Verfahren zur Herstellung eines wasserlöslichen, selbsthärtenden, polymeren Kondensationsproduktes, dessen wäßrige Lösungen und Verwendung.

Die Erfindung betrifft ein wasserlösliches, selbsthärtendes, polymeres Kondensationsprodukt, das sich zur Behandlung von Fasermaterial eignet.

Es ist bekannt, daß die Alkylierung tertiärer Amine mit Alkylhalogeniden oder Dimethylsulfat ein polares Lösungsmittel erfordert (Ullmann 22, S. 496 (1982). Es ist auch bekannt, daß bei der Alkylierung von Dimethyl-oder Diethylaminoethylmethacrylat mit Ethylbromid oder Dimethylsulfat in wäßriger Lösung, die ein polares Lösungsmittel enthält, außer der erwarteten Alkylierung noch spontan eine Polymerisation stattfindet. Hierbei werden wasserlösliche Produkte erhalten (A.S. Maksumova et al.; Referat C.A. 105 (22) : 191641 d), die keine selbsthärtenden Eigenschaften aufweisen.

Darüber hinaus ist es bekannt, daß bei der Quaternierung der genannten Methacrylate und auch der Acrylate selbst in Gegenwart von nur geringen Wassermengen in erheblichem Maße Hydrolyseprodukte entstehen (EP-PS 11 116), weshalb derartige Alkylierungen in Abwesenheit von Wasser durchgeführt werden.

Es wurde nun gefunden, daß sich in überaus einfacher Weise wasserlösliche, selbsthärtende, polymere Kondensationsprodukte herstellen lassen, wenn man Dialkylaminoalkyl(meth)acrylate in wäßriger Lösung, die gegebenenfalls ein Lösungsmittel enthält, mit Dialkyl-alkanphosphonat unter Viskositätserhöhung reagieren läßt. Die erhaltenen Produkte sind wasserlöslich, sind aber durch Erhitzen in den unlöslichen Zustand überführbar.

Die vorliegende Erfindung beschreibt also ein Verfahren zur Herstellung eines wasserlöslichen, selbsthärtenden, polymeren Kondensationsproduktes wie es im Patentanspruch 1 und in den Unteransprüchen 2 bis 11 näher beschrieben ist.
Wäßrige Lösungen dieser Kondensationsproduktes und deren Verwendung werden in den Patentansprüchen 12 und 13 unter Schutz gestellt.
Es ist überaus überraschend, daß trotz der Anwesenheit von Wasser und der damit verbundenen Hydrolyse und trotz der spontanen - und damit im Grunde genommen unkontrollierten - Polymerisation, reproduzierbare, wasserlösliche, polymere Kondensationsprodukte mit wertvollen Eigenschaften herstellbar sind. So lassen sich diese Produkte im Gegensatz zu den bekannten Polymerisaten durch einfaches Erhitzen aushärten und liefern bei Anwendung auf Textilien gute antistatische Effekte ohne nachteilige Beeinflussung der Reib-und Wasserechtheit. Diese Effekte sind außerdem - auch hier liegt ein wesentlicher Unterschied zum Stand der Technik -sehr gut wasch-aber auch chemischreinigungsbeständig.

Als Verbindungen der Formel (I)

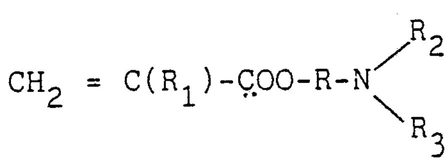

in der R = Alkylen mit 2 bis 4 C-Atomen, $R_1$ = H oder Methyl, $R_2$ oder $R_3$ unabhängig voneinander ein Alkylrest mit 1 bis 4 C-Atomen bedeuten, werden insbesondere Dimethylaminoethyl(meth)acrylate eingesetzt. Selbstverständlich sind auch Verbindungen geeignet, in denen R z.B. den Propylrest oder in denen $R_2$ bzw. $R_3$ Ethyl-oder i-Propyl bzw. Butyl bedeuten. Als solche Verbindungen seien Dimethylaminopropylmethacrylat, Diisopropylaminoethylmethacrylat, Diethylaminoethylacrylat und Dimethylaminopropylacrylat genannt. In der Regel werden Mischungen der Verbindungen der Formel (I) verwendet, wobei es durchaus möglich ist, daß bis zu 100 Mol%, insbesondere bis zu 50 Mol% dieser Produkte in Form von Hydrolysenprodukten, also im Normalfall einer Mischung aus der ungesättigten Säure und dem Dialkylaminoalkohol, Verwendung finden können. Überwiegt dabei der Anteil der Hydrolyseprodukte, so entstehen summa summarum anionische Endprodukte, weshalb bevorzugt nur bis zu 50 Mol% der Verbindungen (I) in hydrolysierter Form angewandt werden.

Die Phosphorsäureester der Formel (II) sind allgemein bekannt.

Der Fachmann wird also von sich aus die geeigneten Verbindungen auswählen, wobei selbstverständlich die niederkettigen Esterderivate, also z.B. das Dimethylmethanphosphonat oder das Dimethylpropanphosphonat bevorzugt zur Anwendung kommen, aber auch Diisopropylmethanphosphonat gut geeignet ist.

Die Verbindungen der Formel (I) und (II) werden in einem Verhältnis von 1 Mol zu 0,3 bis 1,5 Mol umgesetzt. Besonders bevorzugt ist ein Verhältnis von 1 Mol Verbindung der Formel (I) zu 0,8 bis 1,2 Mol an Verbindung der Formel (II).

Zur Herstellung der wasserlöslichen, selbsthärtenden, polymeren Kondensationsprodukte werden die Verbindungen der Formeln (I) und (II) in den angegebenen Mengenverhältnissen in Gegenwart von Wasser unter Erhitzen zur Reaktion gebracht. Vorteilhaft ist es dabei, wenn ein Teil, maximal 65 %, des Wassers durch ein Lösungsmittel, insbesondere polares Lösungsmittel ersetzt ist. Als polare Lösungsmittel kommen dabei zumindestens teilweise wasserlösliche, einwertige Alkohole mit 1 bis 4 C-Atomen in Betracht. Aber auch zwei-oder mehrwertige Alkohole und/oder deren Mono-, Di-oder Polyalkylether mit einem Molekulargewicht von mindestens 70 bis ca. 200 gelangen zum Einsatz. Der Fachmann kennt diese Verbindungen wie z.B. Ethanol, 1,2-Propylenglykol, Ethylglykol und wird keine Schwierigkeiten haben, entsprechende Verbindungen auszuwählen. Daneben sind aber auch alkylsubstituierte Benzole, z.B. Toluol, als Lösungsmittel geeignet.

Bei der Umsetzung ist darauf zu achten, daß das Gewichtsverhältnis der Summe aus Wasser und Lösungsmittel zu der Summe aus den Verbindungen der Formel (I) und (II) zu Beginn der Reaktion mindestens 1:1 beträgt, wobei es besonders vorteilhaft ist, wenn das Lösungsmittelgemisch zu einem Fünftel bis zu etwa der Hälfte aus dem Lösungsmittel besteht. Die Obergrenze der Summe aus Wasser und ggfs. Lösungsmittel ist nicht begrenzt, doch wird der Fachmann darauf achten, daß die entstehenden Endprodukte nicht zu verdünnt entstehen, so daß die obere Grenze aus Zweckmäßigkeitsgründen bei einem Verhältnis von etwa 1 : 10 liegt.

Werden die Verbindungen der Formeln (I) und (II) in Gegenwart von Wasser und ggfs. Lösungsmitteln erhitzt, so erfolgt eine Erhöhung der Viskosität bedingt durch die fortschreitende Polymerisation. Die untere Grenze für diese Viskosität ist nicht kritisch, doch kann allgemein gesagt werden, daß der Endpunkt der Reaktion dann erreicht ist, wenn die Viskosität auf 500 mPa.s gestiegen ist, bezogen auf etwa 40 bis 50 %iges Produkt. Gleichzeitig mit der Zunahme der Viskosität ist eine Abnahme des pH-Wertes zu beobachten.

Bei der Umsetzung ist man bestrebt, dieselbe solange fortzuführen, bis im wesentlichen keine Doppelbindungen mehr vorhanden sind, d.h. je höher die Endviskosität ist, umso wahrscheinlicher ist es, daß das Gemisch gut durchreagiert hat. Bevorzugt wird deshalb die Reaktion bis zu einer Viskosität von 1000 bis 6000 mPa.s geführt (bei Zimmertemperatur). Es können aber noch geringe Mengen an Doppelbindungen in dem Reaktionsgemisch vorhanden sein, und es wird deshalb durch Zugabe eines bekannten Polymerisationsinitiators, z.B. Natriumpersulfat, die Reaktion durch kurzzeitiges Erhitzen vervollständigt.

Nähere Einzelheiten der Herstellung der wasserlöslichen, selbsthärtenden, polymeren Kondensationsprodukte können den Beispielen entnommen werden.

Die so hergestellten Kondensationsprodukte kommen in Form von wäßrigen Lösungen in den Handel, wobei diese Lösungen auf etwa 10 bis 50 Gew.% an Festsubstanz eingestellt werden.

Die wie oben beschrieben hergestellten Kondensationsprodukte bzw. deren wäßrige Lösungen werden zur Behandlung von Fasermaterialien verwendet. Die so behandelten Materialien zeichnen sich dabei vor allem dadurch aus, daß die elektrostatische Aufladung in hohem Maße verhindert wird, wobei der Weißgrad sehr gut erhalten bleibt und auch Farbtonverschiebungen weitgehend vermieden werden. Als besonders vorteilhaft ist weiterhin die hohe Wasserechtheit und die gegenüber dem Stand der Technik merklich verbesserte Trocken-und Naßreibechtheit hervorzuheben. Als Fasermaterialien kommen insbesondere synthetische Materialien, vor allem Polyester in Form von Maschenware oder allgemein Gewebe, aber auch Polyamidtextilien und alle solchen Materialien, bei denen die statische Aufladung ein Problem ist und deshalb vermieden werden sollte, in Betracht.

Die eigentliche Ausrüstung erfolgt dabei in einfacher Weise dadurch, daß die Kondensationsproduktlösung mit Wasser verdünnt wird (Mengen 1 bis 50 g/l Feststoff), dann auf das Material in bekannter Weise aufgebracht und durch Trocknen und anschließende Kondensation bei Temperaturen von etwa 120 bis 200°C die Ausrüstung fertiggestellt wird.

Die so ausgerüsteten Textilien weisen gegenüber dem Stand der Technik insgesamt gesehen merklich verbesserte Eigenschaften auf, wobei noch besonders zu betonen ist, daß eine sehr hohe Wasch-und Reinigungspermanenz dieser Effekte gewährleistet ist. Diese Verbesserungen sind ausgesprochen überraschend, nachdem der Stand der Technik schon auf einem beachtlichen Niveau angelangt war.

Die Erfindung wird durch die nachfolgenden Beispiele näher beschrieben, wobei %-Angaben = Gew.% sind.

Beispiel 1

Einsatzmengen: 28,6 g Dimethylaminoethylacrylat,
125,8 g Dimethylaminoethylmethacrylat,
124,0 g Dimethylmethanphosphonat,
50,0 g Ethanol,
A) 230,0 g $H_2O$,
B) 370,0 g $H_2O$ als Verdünnungswasser.

Wasser (Menge A) und Ethanol werden vorgelegt, die Acrylate und das Phosphonat unter Rühren zugegeben (pH-Wert ca. 9,7) und dann auf Rückfluß (92°C) aufgeheizt. Es wird solange auf Rückfluß gehalten, bis eine Viskosität von 3500 bis 4500 mPa.s (bei 20°C) erreicht ist (ca. Zeit 3,5 bis 4 Std.), wobei der pH-Wert auf 6,2 abgefallen ist. Dann wird weiteres Wasser (Menge B) zugegeben und dabei eine Temperatur von 60°C eingestellt. Nun werden zur Vervollständigung der Reaktion 6 ml 25 %ige $Na_2S_2O_8$-Lösung zugegeben, 15 Minuten bei Temperatur gehalten (keine bis geringe Reaktion), auf 80°C hochgeheizt, 1 Stunde bei dieser Temperatur gehalten, abgekühlt und filtriert. Die erhaltene ca. 30%ige Lösung weist einen pH-Wert von 5,0 bis 5,5, eine
Viskosität von 300 bis 700 mPa.s und einen
Flammpunkt von ca. 50°C auf.

Beispiel 2

Einsatzmengen: 104,8 g Dimethylaminoethylmethacrylat,
28,7 g Methacrylsäure,
29,7 g Dimethylaminoethanol,
124,0 g Dimethylmethanphosphonat und
290,0 g $H_2O$.

Man legt das Wasser vor und gibt Dimethylaminoethylmethacrylat, Methacrylsäure, Dimethylaminoethanol und Dimethylmethanphosphonat zu (Temperatur 33°C). Anschließend wird unter Rühren auf Rückfluß aufgeheizt (103°C), 2 Stunden bei dieser Temperatur bis zur deutlichen Viskositätszunahme gehalten, dann 380 g $H_2O$ zugegeben. Danach werden bei 60°C 4 ml 25 %ige $Na_2S_2O_8$-Lösung zugerührt, wobei keine Reaktion erkennbar ist. Nun wird das erhaltene Kondensationsprodukt auf 80°C aufgeheizt, 1 Stunde bei dieser Temperatur belassen und dann der Ansatz abgekühlt und filtriert. Die erhaltene wäßrige, kationaktive Lösung hat einen pH-Wert von 5,2, eine Viskosität von ca. 650 mPa.s und ist ca. 30 %ig.

Beispiel 3

Einsatzmengen: 21,6 g Acrylsäure,
26,7 g Dimethylaminoethanol,
188,7 g Dimethylaminoethylmethacrylat
148,8 g Dimethylmethanphosphonat,
210,0 g Ethanol und
210,0 g $H_2O$.

Wasser und Ethanol werden vorgelegt, dann nacheinander Acrylsäure, Dimethylaminoethanol, Methacrylat und Phosphonat zugegeben, wobei sich eine Temperatur von 32°C und ein pH-Wert von 8,6 einstellt. Nach dem Aufheizen auf Rückfluß (85°C) und 4-stündiger Reaktion ist die Viskosität auf ca. 5000 mPa.s gestiegen. Dann werden 480 g Wasser zugegeben, auf 60°C abgekühlt, mit 10 ml 25%iger $Na_2S_2O_8$-Lösung nachreagieren gelassen, auf 80°C aufgeheizt, 30 Minuten bei dieser Temperatur gehal ten und 360 g $H_2O$/Ethanol-Gemisch abdestilliert (Endtemperatur 98°C). Nach dem Abkühlen wird Filtermehl zugegeben und filtriert. Die erhaltene kationaktive Lösung hat eine Viskosität von 1900 mPa.s.

Beispiel 4

Das Beispiel 1 wird unter Verwendung eines Gemisches aus
140 g Toluol und
140 g Wasser
wiederholt. Nach Zugabe von 560 g Wasser (Menge B) werden das gesamte Toluol und 50 g Wasser bei bis zu 100°C abdestilliert. Die Fertigstellung erfolgt wie im Beispiel 1 angegeben, wobei eine ca. 30%ige, wäßrige Kondensationsprodukt-Lösung erhalten wird.
Zu ähnlich brauchbaren Kondensationsprodukt-Lösungen gelangt man, wenn nur 96 g Dimethylmethanphosphonat zur Anwendung gelangen.

Beispiel 5

Einsatzmengen: 90,0 g Diethylaminoethylacrylat,
377,4 g Dimethylaminoethylmethacrylat,
540,0 g Diisopropylmethanphosphonat,
520,0 g Ethanol und
520,0 g $H_2O$.

Die Umsetzung wird, wie im Beispiel 3 beschrieben, vorgenommen (Endviskosität vor Zugabe von 2000 g Verdünnungswasser: 650 mPa.s). Es werden 880 g Alkohol/Wasser-Gemisch abdestilliert. Die erhaltene kationaktive wäßrige Lösung ist ca. 32 %ig und weist einen pH-Wert von 5,2 auf.

Beispiel 6

Das Beispiel 5 wird wiederholt, wobei anstelle der dort genannten Verbindungen der Formeln (I) und (II)
86 g Dimethylaminoethylacrylat,
398 g Dimethylaminopropylmethacrylat und
372 g Dimethylmethanphosphonat
unter sonst gleichen Bedingungen (1750 g Verdünnungswasser) umgesetzt werden.

Beispiel 7

Einsatzmengen: 103,3 g Methacrylsäure,
106,8 g Dimethylaminoethanol,
124,0 g Dimethylmethanphosphonat
und
280,0 g $H_2O$.

Wasser wird vorgelegt, dann werden nacheinander
Methacrylsäure,
Dimethylaminoethanol (Rotfärbung) und
Dimethylmethanphosphonat
unter Rühren zugegeben und auf Rückfluß (102°C) aufgeheizt. Nun wird 4 Stunden gehalten, dann werden 370 g $H_2O$ zugegeben, bei 60°C 8 ml 25 %ige $Na_2S_2O_8$-Lösung beigemischt, auf 80°C aufgeheizt, eine weitere Stunde bei dieser Temperatur gehalten, abgekühlt und filtriert.

Die erhaltene ca. 32 %ige anionische Lösung weist eine Viskosität (bei 20°C) von 450 mPa.s auf.

Beispiel 8

Polyestertaft (97 g/m²) wird mit folgenden Flotten foulardiert:

A) 40 g/l Kondensationsproduktlösung nach Beispiel 1 (erfindungsgemäß) und

B) 40 g/l eines 45 %igen handelsüblichen Antistatikmittels (®ZEROSTAT EP), auf eine Flottenaufnahme von 40 % abgequetscht, getrocknet bei 110°C und 1 Minute bei 140°C kondensiert. Die Prüfung der antistatischen Wirkung und deren WaschPermanenz zeigt folgende Tabelle:

| | statische Aufladung (Rothschild ST-V-Meter | | | | Oberflächen-widerstands-messung nach DIN 54345[1)] | | Aschen-test [2)] | |
|---|---|---|---|---|---|---|---|---|
| | Volt | | Halbwertszeit in Sekunden | | | | | |
| | OR | W | OR | W | OR | W | OR | W |
| Flotte A) (erfindungsgem.) | 0 | 1,3 | 0 | 4,0 | $8 \cdot 10^{8}$ | $1{,}00 \cdot 10^{10}$ | - | - |
| Flotte B) (Stand der Technik) | 1,0 | 3,3 | 1,2 | 7,0 | $5 \cdot 10^{9}$ | $1{,}25 \cdot 10^{10}$ | - | +- |
| unbehand. | 7,0 | - | > 5 | - | $1{,}65 \cdot 10^{10}$ | - | ++ | / |

1) bei 20°C und 60 % Luftfeuchtigkeit.

2) Beim Aschentest wird das auf einer Gummiunterlage liegende Muster mit einem Hartgummistab 10 mal abgerieben und das Muster mit der Oberseite über Zigarettenasche gehalten (Abstand 1 cm) und dabei der Aschenanflug beurteilt.

OR = Original

W = nach 10-maliger üblicher 40°C-Maschinenwäsche mit 5 g/l Haushaltwaschmittel.

Besonders vorteilhaft ist die erfindungsgemäße Anwendung hinsichtlich der Reibechtheit. So werden bei der Trockenreibechtheit um 1,5 - 2 Einheiten bessere Noten und bei der Naßreibechtheit um 1 - 1,5 Einheiten bessere Noten erhalten (DIN 54 102), wobei es notwendig ist, die Muster 1 Minute bei 180°C zu kondensieren.

Beispiel 9

Eine PES-Webware rot (ca. 184 g/m²), gefärbt mit 2,5 % ®TERASIL rot 3BL(*), wird mit den Flotten A) und B) aus Beispiel 8 foulardiert, auf 50% Flottenaufnahme abgequetscht und 10 Minuten bei 110°C getrocknet und 1 Minute bei 180°C kondensiert. Mit dem so ausgerüsteten Gewebe, das sehr gute antistatische Effekte aufweist, wird die Wasserechtheit nach DIN 54006 bestimmt, wobei das Einnähen des Musters in ein Testgewebe (Multifiber Qualität 10 A) vorgenommen wird. Dabei werden auf den unterschiedlichen Geweben des Testgewebes folgende Resultate erhalten:

| | Celluloseacetat | Wolle | Polyacryl-nitril | Poly-ester | Poly-amid | Baum-wolle |
|---|---|---|---|---|---|---|
| Flotte A) (erfindungsgemäß) | 3 | 3 | 4 | 3 - 4 | 2 | 3 |
| Flotte B) (Stand der Technik) | 1 | 1 | 2 | 1 - 2 | 1 | 1 - 2 |
| unbehandelt | 4 | 4 - 5 | 4 - 5 | 4 | 3 - 4 | 4 - 5 |

* (CIBA-GEIGY AG)

**Ansprüche**

1. Verfahren zur Herstellung eines wasserlöslichen, selbsthärtenden, polymeren Kondensationsproduktes, dadurch gekennzeichnet, daß man 1 Mol einer Verbindung der allgemeinen Formel (I)

(I) 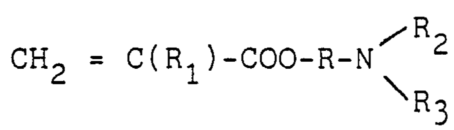

in der R = Alkylen mit 2-4 C-Atomen, $R_1$ = H oder Methyl, $R_2$ und $R_3$ unabhängig voneinander einen Alkylrest mit 1 bis 4 C-Atomen bedeuten, mit 0,3 bis 1,5 Mol einer Verbindung der allgemeinen Formel (II)

(II) 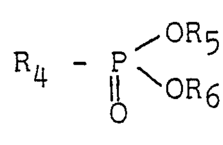

in der $R_4$, $R_5$ und $R_6$ unabhängig voneinander einen Alkylrest mit 1 bis 3 C-Atomen bedeuten, in Gegenwart von Wasser unter Erhitzen und unter Erhöhung der Viskosität reagieren läßt, bis im wesentlichen keine Doppelbindungen mehr vorhanden sind.

2. Verfahren nach Patentanspruch 1, dadurch gekennzeichnet, daß man die Verbindungen der Formeln (I) und (II) bis zu einer Viskosität von mindestens 500 mPa•s reagieren läßt (bezogen auf etwa 40 bis 50 %iges Produkt).

3. Verfahren nach den Patentansprüchen 1 und 2, dadurch gekennzeichnet, daß man nach Erreichen der erhöhten Viskosität einen Polymerisationsinitiator zusetzt, um gegebenenfalls noch vorhandene Verbindungen mit Doppelbindungen unter Erhitzen ausreagieren zu lassen.

4. Verfahren nach den Patentansprüchen 1 bis 3, dadurch gekennzeichnet, daß das Reaktionsmedium zusätzlich ein Lösungsmittel, insbesondere ein polares Lösungsmittel, enthält.

5. Verfahren nach den Patentansprüchen 1 bis 4, dadurch gekennzeichnet, daß das Gewichtsverhältnis der Summe aus Wasser und Lösungsmittel zu der Summe aus den Verbindungen der Formel (I) und (II) zu Beginn der Reaktion mindestens 1 : 1 beträgt.

6. Verfahren nach den Patentansprüchen 1 bis 5, dadurch gekennzeichnet, daß als polares Lösungsmittel zumindest teilweise wasserlösliche, einwertige Alkohole mit 1 bis 4 C-Atomen, zwei-oder mehrwertige Alkohole und/oder deren Mono-, Di-oder Polyalkylether mit einem Molekulargewicht von mindestens 70 bis ca. 200 eingesetzt werden.

7. Verfahren nach den Patentansprüchen 1 bis 5, dadurch gekennzeichnet, daß als Lösungsmittel ein alkylsubstituiertes Benzol eingesetzt wird.

8. Verfahren nach den Patentansprüchen 1 bis 7, dadurch gekennzeichnet, daß die Verbindung (I) zumindest teilweise aus Dimethylaminoethylmethacrylat besteht.

9. Verfahren nach den Patentansprüchen 1 bis 8, dadurch gekennzeichnet, daß als Verbindung (I) eine Mischung aus Dimethylaminoethylacrylat und Dimethylaminoethylmethacrylat eingesetzt wird.

10. Verfahren nach den Patentansprüchen 1 bis 9, dadurch gekennzeichnet, daß als Verbindung (II) Dimethylmethanphosphonat eingesetzt wird.

11. Verfahren nach den Patentansprüchen 1 bis 10, dadurch gekennzeichnet, daß die Verbindungen (I) bis zu 100 Mol%, insbesondere bis zu 50 Mol% in Form ihrer Hydrolyseprodukte eingesetzt werden.

12. Wäßrige Lösung eines nach den Patentansprüchen 1 bis 11 hergestellten polymeren Kondensationsproduktes.

13. Verwendung der nach den Patentansprüchen 1 bis 11 hergestellten Kondensationsprodukte zur Behandlung von Fasermaterialien.